# EUROPEAN PATENT SPECIFICATION

(11) **EP 0 752 098 B1**
(45) Date of publication and mention of the grant of the patent: **11.09.2002**
(21) Application number: 94912669.2
(22) Date of filing: 22.03.1994
(51) Int. Cl.: G01N 27/28

(54) **SENSOR FOR MONITORING IONIC ACTIVITY IN BIOLOGICAL FLUIDS**
SENSOR ZUR ÜBERWACHUNG DER IONENAKTIVITÄT IN BIOLOGISCHEN FLÜSSIGKEITEN
CAPTEUR DE CONTROLE DE L'ACTIVITE IONIQUE DANS LES LIQUIDES BIOLOGIQUES

(43) Date of publication of application: 08.01.1997
(73) Proprietor: Opl, Hans, 43029 Traversetolo (Parma) (IT)
(72) Inventor: OPL, Hans, I-43029 Traversetolo (IT); BOSELLI, Pietro, Marco, I-20149 Milano (IT)
(74) Representative: Gotra, Stefano
(86) International application number: IT9400028
(87) International publication number: WO95025953

(56) References cited:
- EP-A- 0 102 042
- WO-A-87/00286
- WO-A-91/01495
- WO-A-92/04868
- US-A- 4 791 932
- TRENDS IN ANALYTICAL CHEMISTRY, vol.2, no.2, February 1987, AMSTERDAM, NL pages 46 - 49 DIAMOND ET AL. 'In vivo sensors'

## Description

The invention relates to a biomedical monitoring apparatus comprising a disposable sensor for monitoring ionic activity in biological fluids and a process for obtaining the sensor.

In the biomedical field, and especially in the field of dialysis, it is essential to identify both presence and quantities of ions of chemical elements in diluted biological fluids such as blood, and in recent years much effort has been expended in the search for improvements in monitoring apparatus for the purpose.

Up until now, determining ionic activity, that is, assessing the concentration of one or more ions in a fluid, is performed in a laboratory after having drawn a quantity of the fluid to be analyzed at predetermined time intervals, with considerable discomfort on the part of the patient.

Present laboratory techniques do not provide instantaneous answers, which may be necessary in certain circumstances as well as in some pathological states, where the doctor needs results fast in order to be able to proceed to a cure or therapy.

US -A-4 791 932 discloses an extracorporeal sensing module comprising a plastic housing member on which a plastic top portion, including a plurality of compartments for receiving electrodes, is applied.

The electrodes comprise a ion-selective membrane and a reference membrane and the electrical signals from the electrodes are received by a data processing unit.

In said document, the electrodes configuration (in parallel along the housing) can not enable the electrodes to work as a capacitor: the ion concentration is determined by potentiometric analysis, which as well as the amperometric and conducimetric analysis is not able to stabilize the signal.

The document discloses a convex membrane, having tapered ends and longitudinally spaced along and forming a part of the housing. Since the main component of the membrane is a ionofore substance, with very high volatility, its size and location will cause a dispersion of the ionofore and its migration into the plastic tube which supports the electrodes.

The circulation of ions may cause microcurrents which can damage the blood of the patient.

Furthermore the "U" shaped section of the disposable portion makes necessary the use of epoxy resin or of other materials to fill in.

A principal aim of the present invention is to quantify one or more ions in a biological fluid in real time as well as continuously during treatment, such as dialysis, on an individual patient. With the invention, the doctor can follow the activity of the ion on a monitor, and can record the results so that later a comparison can be made with other results and a full pathology documented.

A further aim of the invention is to provide an apparatus which can rapidly be calibrated according to the type of ion to be assessed, the calibration being done only once and before commencing a treatment.

A still further aim of the invention is to provide a stable sensor, guaranteeing a uniform signal overall during a therapy.

These and other aims besides are all achieved by the present invention, which is characterised as in the accompanying claims.

Further characteristics and advantages of the present invention will better emerge from the detailed description that follows, of an embodiment of the invention, illustrated in the form of a non-limiting example in the accompanying drawings, in which:
- Figure 1 shows a longitudinal section of a conduit insertable in a circulation circuit of a fluid, and bearing a sensor for ionic activity;
- figure 2 shows the conduit according to section 1-1 of figure 1;
- figure 3 schematically shows the totality of components which make up the apparatus.

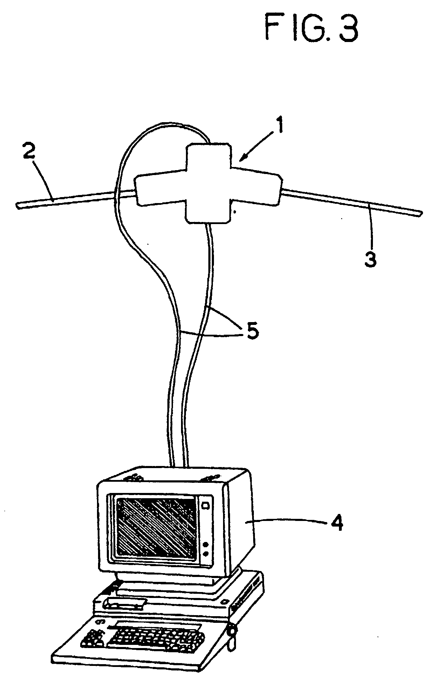

With reference to figure 3, the apparatus comprises a dedicated part, denoted by 1, which is inserted between a fluid inlet conduit 2 and a fluid outlet conduit 3 through which flows a liquid containing a determined quantity of ions, and also comprises a data processing unit 4 receiving electrical signals coming from the dedicated part through two electrical conductors 5.

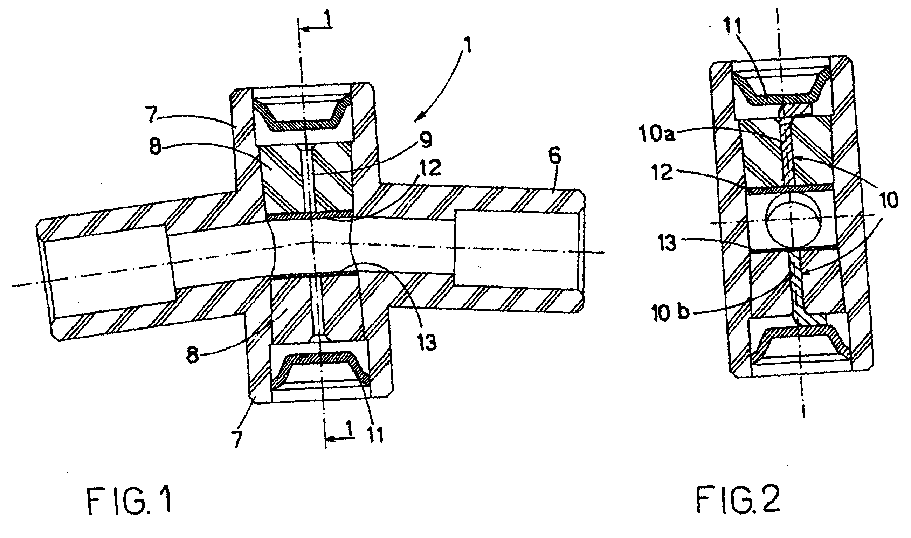

As can be seen in figures 1 and 2, the dedicated part 1 is constituted by a section of plastic tube 6, advantageously-made in stiff PVC, which is provided with two projections 7 through which a single through-hole is made. Two conical plugs 8 made in the same material as the plastic tube 6 are inserted in the two ends of the through-hole.

Each plug is provided with a central through hole 9 in which an electrode 10 is inserted, made of a specially treated metal such as silver chloride.

On its lower surface facing the central through-hole of the plastic tube 6, the upper plug 8 bears a ion-selective membrane 12. The disposable ion-selective membrane 12 monitors the activity of one or more ions.

The manufacturing process of the ion-selective membrane 12 will be described hereinafter.

The projection through-hole 9 is closed at either end by sunk contacts 11 forced along the walls of the projections up until they contact with the electrodes 10.

In more detail, the upper metal electrode 10a is inserted between the ion-selective membrane 12 and the upper contact, while the lower metal electrode 10b touches the lower contact and penetrates into the plastic tube 6 hole sufficiently deeply to contact with an inert membrane 13, such that both the membranes 12 and 13 are in contact with the liquid to be analyzed.

The tube segment constituting the dedicated part 1 can be sterilized according to normal standard procedures.

In the dedicated part, following the passage of biological fluid containing unknown ions, a millivolt electrical signal is generated, the numeric value of which is correlated to the ionic activity in the fluid, which signal is then sent to the data processing unit to be collected, memorized and processed in order to be translated into a numeric value, and which is then visualized in alphanumeric and/or graphic form.

In the illustrated embodiment reference is made to two only projections 7 with two electrodes 10 and one only ion-selective membrane 12, though it is evident that further couples of projections could be provided along the plastic tube 6, together with electrodes and ion-selective membranes for reading various ions, without having to modify the invention significantly.

The process for obtaining the ion-selective membrane 12 will now be described.

The process is based on the preparation of a solution for a certain quantity of PVC powder in a solvent suitable not only for PVC but also for an additive carrier matrix solution. When the PVC solution is ready, it is poured in an evaporation dish and left until it has completely evaporated.

Thus a membrane or film is obtained which can be removed from the dish and packed in card in a dark room.

Various methods can be used to mount the membrane on the lower face of the plug, for example by cutting the film into discs which can then be cemented on to the plug. The membrane can also be directly formed on the plug, if so desired.

To obtain the above, a determined volume of the solution can be poured directly on to the plugs, which are specially prepared so that the solution does not drip off them during the hardening process.

The above-described process, though relatively rather long to achieve, obviates thermal stress on the membranes, which therefore last longer and are more stable.

Now a practical and non-limiting example of the process will be described, for making a film which will be sensitive to the sodium ion.

The following are poured into a hermetically-scalable glass container:
1) two millilitres of a suitable solvent for all the components which will make up the film, viz:
2) two hundred microlitres of matrix solution with the additive (5mg/ml);
3) close, shake, reopen;
4) two hundred microlitres of carrier matrix solution (50 mg/ml);
5) add one millilitre of solvent;
6) close, shake, reopen;
7) add one hundred and sixty eight microlitres of PVC plasticizer;
8) due millilitres of solvent;
9) close, shake, reopen;
10) sprinkle two hundred mg. of PVC powder;
11) close and shake for two minutes;
12) shake for one-minute spells every 15 minutes, up until the PVC is solubilized;
13) pour the mixture into an covered evaporation dish and leave in a quiet place;
14) wait until the film is completely formed;
15) remove the film from the dish and leave it in a dark place.

If the film is to be made directly on the plug, proceed up until point 12 above and then deposit 64 microlitres of the mixture obtained directly on the centre of the lower face of the plug. Then wait until the mixture has completely evaporated.

The inert membrane 13 can be made using the same process as the membrane 12, with the only difference being that operation no. 4 above will be excluded, so that no ion carrier is introduced.

## Claims

1. A biomedical monitoring apparatus and a sensor for monitoring ionic activity in biological fluids, comprising:
- a length of plastic tube (6) insertable in a circulation circuit of a biological fluid, in which tube (6) one or more pairs of electrodes (10) are inserted, each pair comprising a first electrode (10a) connected to a ion-selective membrane (12) contacting the biological fluid and a second electrode (10b) connected to an inert membrane (13) placed in direct contact with the biological fluid;
- each ion-selective membrane (12) containing a ion-carrier solution, the ions being of a type which coincides with the ion type to be monitored;
- a data processing unit (4) receiving electrical signals coming from at least two said electrodes (10) inserted in the plastic tube (6), said unit (4) being specially set up in order to translate said electrical signals into a numerical value of ionic activity and to visualize said signals in alphanumeric and/or graphic form, **characterized in that** in each couple of membranes (12, 13) constituting a sensor, the ion-selective membrane (12) is arranged in front of the inert membrane (13), on the opposite side of the tube (6).

2. An apparatus as in claim 1, wherein each electrode (10) is arranged between a membrane (12, 13) and a sunk contact (11).

3. An apparatus as in claim 1, **characterised in that** the plastic tube (6) comprises one or more pairs of projections (7) each being provided with a through hole in which a conical plug (8) is inserted; one electrode (10) being implanted inside each conical plug (8); one of said plugs (8) of said pair ports an ion-selective membrane (12) and the other supports an inert membrane (13) in such a way that the membranes are in contact with the fluid to be analyzed as well as with the electrode (10).

4. An apparatus as in claim 1, **characterised in that** the data processing unit comprises means for calibrating the apparatus by an insertion into the biological fluid of a liquid having a preestablished sample ionic concentration.

5. A process for obtaining an apparatus according to claim 3 comprising the steps of:
- providing a plastic tube comprising one or more pairs of projections, one projection within a pair being located directly opposite the other projection of said pair, each projection being further provided with a through hole in which a conical plug is inserted, one electrode being implanted inside each conical plug,
- preparing a PVC solution in a solvent suitable for solubilising both PVC and an additive solution,
- mixing the PVC solution with an ion-carrier solution for a predetermined ion, to obtain a mixture,
- depositing the mixture in preestablished doses on the plug of said one projection within said pair in such a way that the formation of ion-selective membrane by evaporation occurs directly on said plug and
- depositing in a similar manner the mixture not containing the ion-carrier on the plug of said other projection of said pair in order to form an inert membrane on said plug.

## Patentansprüche

1. Biomedizinisches Überwachungsgerät und Sensor zur Überwachung der Ionenaktivität in biologischen Flüssigkeiten, umfassend:
- einen in einen Kreislauf einer biologischen Flüssigkeit einsetzbaren Plastikrohrstutzen (6), in den ein oder mehrere Elektrodenpaare (10) eingesetzt sind, die jeweils eine erste, mit einer ionenselektiven, mit der biologischen Flüssigkeit in Kontakt stehenden Membran (12) verbundene Elektrode (10a) und eine zweite, mit einer inerten, in direktem Kontakt mit der biologischen Flüssigkeit stehenden Membran (13) verbundende Elektrode (10b) umfassen;
wobei jede ionenselektive Membran (12) eine Ionenträgerlösung enthält, deren Ionen vom Typ des zu überwachenden Ionentyps sind,
- eine Datenverarbeitungseinheit (4), die elektrische, von mindestens zwei der genannten in das Plastikrohr (6) eingesetzten Elektroden (10) kommende Signale empfängt, wobei diese Einheit (4) zur Umwandlung der genannten elektrischen Signale in einen numerischen Wert der Ionenaktivität und zur Anzeige der genannten Signale in alphanumerischer bzw. grafischer Form speziell eingerichtet ist, **dadurch gekennzeichnet, dass** in jedem einen Sensor bildenden Membranenpaar (12, 13) die ionenselektive Membran (12) gegenüber der inerten Membran (13) auf der entgegengesetzten Seite des Rohres (6) angeordnet ist.

2. Gerät nach Anspruch 1, bei dem jede Elektrode (10) zwischen einer Membran (12, 13) und einem eingebetteten Kontakt (11) angeordnet ist.

3. Gerät nach Anspruch 1, **dadurch gekennzeichnet, dass** das Plastikrohr (6) ein oder mehrere Vorsprungspaare (7) enthält, welche Vorsprünge jeweils ein Durchgangsloch aufweisen, in das ein konischer Stift (8) eingebracht ist und in jeden konischen Stift (8) eine Elektrode (10) eingesetzt ist; wobei einer der genannten Stifte (8) des genannten Paares eine ionenselektive Membran (12) und der andere eine inerte Membran (13) trägt, so dass die Membrane sowohl in Kontakt mit der zu untersuchenden Flüssigkeit als auch mit der Elektrode (10) stehen.

4. Gerät nach Anspruch 1, **dadurch gekennzeichnet, dass** die Datenverarbeitungseinheit Mittel zum Kalibrieren des Gerätes durch Einbringen einer Flüssigkeit mit einer vorbestimmten Muster-Ionenkonzentration in die biologische Flüssigkeit umfasst.

5. Verfahren zur Herstellung eines Gerätes nach Anspruch 3 umfassend folgende Schritte:
- Vorsehen eines Plastikrohres mit einem oder mehreren Vorsprungspaaren, wobei jeweils ein Vorsprung eines Paares direkt gegenüber dem anderen Vorsprung dieses Paares angeordnet ist, und jeder Vorsprung ferner ein Durchgangsloch aufweist, in das ein konischer Stift eingebracht ist und in jedem dieser konischen Stifte eine Elektrode eingesetzt ist,
- Herstellen einer PVC-Lösung in einem zum Lösen sowohl von PVC als auch von einer Zusatzlösung geeigneten Lösungsmittel,
- Vermischen der PVC-Lösung mit einer Ionenträgerlösung für ein vorbestimmtes Ion zur Herstellung einer Mischung,
- Aufbringen der Mischung in vorbestimmten Dosen auf den Stift des genannten einen Vorsprungs des genannten Paares, wodurch sich infolge von Verdampfen an dem genannten Stift eine ionenselektive Membran ausbildet und
- Aufbringen der nicht den Ionenträger enthaltenden Mischung auf den Stift des genannten anderen Vorsprungs des genannten Paares zur Ausbildung einer inerten Membran an diesem Stift.

## Revendications

1. Un appareil biomédical de contrôle et un capteur de contrôle de l'activité ionique dans les liquides biologiques, comprenant:
- une longueur de tube plastique (6) insérable dans un circuit de circulation d'un fluide biologique, dans lequel tube (6) sont insérées une ou plusieurs paires d'électrodes (10), chaque paire comprenant une première électrode (10a) reliée à une membrane sélective d'ions (12) en contact avec le fluide biologique et une seconde électrode (10b) reliée à une membrane inerte (13) placée en contact direct avec le fluide biologique; chaque membrane sélective d'ions (12) contenant une solution transporteuse d'ions, les ions étant du type coincidant avec le type d'ions à contrôler;
- une unité d'élaboration de données (4) recevant des signaux électriques venant d'au moins deux électrodes (10) insérés dans le tube plastique (6), ladite unité (4) étant spécialement programmée pour traduire lesdits signaux électriques en valeurs numériques relatives à l'activité ionique et pour visualiser lesdits signaux sous forme alphanumérique et/ou graphique, **caractérisée en ce que**, dans chaque couple de membranes (12, 13) constituant un capteur, la membrane sélective d'ions (12) est disposée en face de la membrane inerte (13), du côté opposé du tube (6).

2. Un appareil selon la revendication 1, dans lequel chaque électrode (10) est disposée entre une membrane (12, 13) et un contact immergé (11).

3. Un appareil selon la revendication 1, **caractérisé en ce que** le tube plastique (6) comprend une ou plusieurs paires de saillies (7), chacune d'entre elles étant pourvue d'un orifice passant dans lequel est insérée une fiche cônique (8); une électrode (10) étant implantée dans chaque fiche cônique (8); l'une desdites fiches (8) de ladite paire supporte une membrane sélective d'ions (12) et l'autre supporte une membrane inerte (13) de manière à ce que les membranes soient en contact avec le fluide à analyser et avec l'électrode (10).

4. Un appareil selon la revendication 1, **caractérisé en ce que** l'unité d'élaboration de données comprend des moyens pour calibrer l'appareil au moyen de l'insertion dans le fluide biologique d'un liquide ayant une concentration ionique échantillon prédéterminée.

5. Un procédé pour obtenir un appareil selon la revendication 3 comprenant les phases de:
- fourniture d'un tube plastique comprenant une ou plusieurs paires de saillies, une saillie d'une paire de saillie étant disposée directement opposée à l'autre saillie de ladite paire, chaque saillie étant de plus pourvue d'un orifice passant dans lequel une fiche cônique est insérée, une électrode étant implantée dans chaque fiche cônique,
- préparation d'une solution de PVC dans un solvant apte à solubiliser aussi bien le PVC qu'une solution additive,
- mélange de la solution de PVC avec une solution transporteuse d'ion pour un ion déterminé, pour obtenir une mixture,
- dépôt de la mixture en doses prédéterminées sur la fiche d'une saillie de ladite paire de saillies de manière à ce que la formation de la membrane sélective d'ions par évaporation se produise directement sur ladite fiche et
- dépôt de la même manière de la mixture ne contenant pas le transporteur d'ions sur la fiche de ladite autre saillie de la paire de saillie de manière à former une membrane inerte sur ladite fiche.
